# EUROPEAN PATENT SPECIFICATION

(11) **EP 4 655 200 B1**
(45) Date of publication and mention of the grant of the patent: **20.05.2026**
(21) Application number: 24701956.5
(22) Date of filing: 26.01.2024
(51) Int. Cl.: B62M 6/55, B62M 11/06

(54) **DRIVING UNIT FOR AN ELECTRIC VEHICLE**
ANTRIEBSEINHEIT FÜR EIN ELEKTROFAHRZEUG
UNITÉ D'ENTRAÎNEMENT POUR UN VÉHICULE ÉLECTRIQUE

(30) Priority: 27.01.2023 EP 23382065
(43) Date of publication of application: 03.12.2025
(73) Proprietor: Niche Mobility, S.L., 17003 Girona (ES)
(72) Inventor: BARCELÓ CRISTINA, MARC, 17003 GIRONA (ES)
(74) Representative: Araujo, Daniel
(86) International application number: PCT/EP2024/051864
(87) International publication number: WO 2024/156848

(56) References cited:
- CN-U- 202 272 147
- DE-B4- 102018 207 969
- US-A- 3 921 741

## Description

### TECHNICAL FIELD

The present invention relates to a driving unit comprising an electric motor and an electric generator for an electric vehicle, such as an electric bicycle or an electric motorcycle.

### PRIOR ART

A conventional solution for an electric bicycle with self-powering capability (i.e., with the ability to supply itself with electric power) is a bicycle comprising a battery, an electric generator connected to the pedals, and an electric motor located on the rear wheel axle and configured to drive the wheel. However, this configuration has the problem that the location of the electric motor on the rear wheel has a negative influence on the dynamics of the vehicle, wherein this effect is especially notorious when the bicycle comprises a rear suspension, since the electric motor increases the unsprung mass of the vehicle.

In other known solutions, the electric motor is mounted on the frame of the bicycle instead of on the axle of the rear wheel. In this configuration, the electric motor is normally arranged in a position relatively close to the rear wheel and connected to it by means of a chain, wherein the electric motor is generally configured to rotate in the same direction as the wheel and the pedal crank. A known solution when the bicycle has a suspension system configured as a swing arm is to mount the motor on the axle that articulates the swing arm.

However, all known solutions disregard the problem of the compensation of the rotational inertias resulting from the fact of having a plurality of masses rotating around a plurality of axes. These rotating masses generate undesired vibrations that may lead to a failure in the traction/driving system. In addition, the effect of the rotating masses may contribute to increase the resistance of the vehicle to steering. This problem has become even more critical with the progressive increase in the power of electric motors which may require larger electric generators and motors, thus increasing the rotating masses in the overall device.

Therefore, there is room for technical improvement regarding systems for driving an electric bicycle comprising an electric generator and an electric motor. Document CN202272147U shows a driving unit for an electric bike, comprising a pedal system, an electric generator, an electric motor as well as an external transmission system.

### SUMMARY OF THE INVENTION

The present invention addresses the problem of improving the mass distribution and the compensation of rotational inertias of an electric vehicle (e.g., motorcycle or a bicycle) comprising an electric generator and an electric motor, thereby providing vibration compensation while reducing the resistance of the vehicle to steering. This problem is solved by a driving unit according to claim 1. Preferred embodiments of the invention are defined in the appended claims.

A first aspect of the invention refers to a driving unit for an electric bicycle or motorcycle, wherein the driving unit comprises a pedal system, an electric generator, a first intermediate gear system, an electric motor, an output gear wheel, a second intermediate gear system and a control unit.

The pedal system is configured to rotate in a first rotation direction around a first axis based on an input mechanical energy provided by a user of the electric bike (e.g., by pedalling). The pedal system comprises two pedals, two pedal cranks and a pedal gear wheel, wherein the pedal gear wheel is configured to rotate in the first rotation direction around the first axis. The electric generator is configured to be connected (i.e., connectable) to a battery, preferably an external battery (i.e., a battery being external to the driving unit, said external battery not being required to be part of the driving unit).

The first intermediate gear system is configured to connect the pedal system (e.g., the pedal gear wheel of the pedal system) to the electric generator and is further configured to transmit the input mechanical energy of the pedal system to the electric generator, such that the electric generator rotates around a second axis in in the first rotation direction or in a second rotation direction being opposite to the first rotation direction (e.g., the first direction being a clockwise direction and the second direction being a counter clockwise direction when observed from a right lateral side of the driving unit), thereby generating an electric power. In preferred embodiments, the pedal system and the electric generator may be configured to rotate in opposite directions, so that their respective rotational inertias at least partially compensate each other.

An energy input block/system is provided by the combination of the pedal system, the first intermediate gear system and the electric generator.

The electric motor is configured to rotate around a third axis based on an electric energy provided by the external battery and/or by the electric generator in the rotation direction (i.e. either the first rotation direction or the second rotation direction) being opposite to the rotation direction of the electric generator, wherein the rotation of the electric motor is mechanically independent from the rotation of the pedal system. Thus, there is no mechanical connection between the rotation of the electric motor and the rotation of the pedal system. Preferably, the electric motor may be configured to rotate in the same rotation direction of the pedal system, which is preferred embodiments corresponds to the first rotation direction.

The output gear wheel is configured to be connectable to at least one wheel (i.e. at least one driving/traction wheel; preferably, at least to a rear driving/traction wheel) of the electric bike/motorcycle by means of an external transmission system. The external transmission system (e.g., a transmission chain/ belt or similar) may be configured to connect the output gear wheel with the at least one driving wheel (e.g., with a sprocket/pinion arranged on the at least one driving wheel) of the vehicle to cause the electric bike to travel, forwardly or backwardly, along a direction of travel.

The sprocket/pinion may be a fixed sprocket/pinion - i.e., a sprocket configured to rotate together with the driving wheel - such that, depending on the direction of rotation of the electric motor, the fixed sprocket allows the vehicle to travel forward or backward along a direction of travel. This feature is broadly compatible with all the embodiments of the invention. Thus, the electric motor may be configured to temporarily reverse its rotation direction (e.g., upon instruction received from the control unit) (e.g. to temporarily change from the first to the second rotation direction or vice versa) to allow the vehicle to travel backwards when necessary, wherein this advantageous feature is achieved due to the combination of an electric motor that is mechanically independent from the pedal system and the electric generator, and also due to the combination with an external transmission system connecting the output gear wheel with a fixed sprocket arranged at the traction wheel of the vehicle. This is an optional (auxiliary) feature that provides the driving unit with the ability of temporarily driving the electric vehicle backwards when necessary.

The direction of travel is the direction along which the vehicle moves forwards (or rearwards) and is, normally (e.g. when the vehicle travels along a straight line), substantially coincident with a longitudinal direction of the vehicle (i.e., a direction extending longitudinally from a rear part of the vehicle to a front part of the vehicle, this longitudinal direction being substantially parallel to a ground on which the vehicle is placed).

The second intermediate gear system is configured to transmit the rotation of the electric motor to the output gear wheel, such that the output gear wheel rotates in the first direction (e.g. to cause the vehicle to travel forwards). Further, the second intermediate gear system may additionally be configured such that, when the electric motor reverses (e.g. temporarily) its rotation direction (e.g. as part of the auxiliary function of providing an electric vehicle with the ability to travel backwards - i .e., reverse gear), then second intermediate gear system causes the output gear wheel to also reverse its rotation direction, so that the output gear wheel may temporarily rotate in the second rotation direction.. Therefore, the second intermediate gear system may be configured to transmit the rotation of the electric motor to the output gear wheel, such that either the output gear wheel always rotates in the same direction as the electric motor (e.g. when the electric motor is configured to generally rotate in the first rotation direction and temporarily/auxiliary rotate in the second rotation direction) or the output gear wheel always rotates in the rotation direction being opposite to the rotation of the electric motor (e.g. when the electric motor is configured to generally rotate in the second rotation direction and temporarily/auxiliary rotate in the first rotation direction).

An energy output block/system is provided by the combination of the electric motor, the second intermediate gear system and the output gear wheel.

The control unit is configured to control the rotation of the electric motor (e.g., rotational speed and/or direction of rotation). The control unit may be configured to control the rotation of the electric motor based on a predetermined set of instructions and/or based on a command provided by a user of the vehicle (e.g., a real-time command). In some embodiments, the control unit may be configured to control the rotation of the electric motor and also to control a level of resistance (e.g., mechanical resistance) provided by the electric generator. Thus, the control unit may regulate the resistance provided by the electric generator based on a predetermined set of parameters and/or based on a command (e.g., a real-time command) provided by the user of the vehicle.

The control unit may be configured to know the relative positions between each rotating mass of the driving unit, the geometrical configuration of each rotating mass (e.g., the respective shapes) and the values of each rotating mass (e.g., masses of the pedal system, the electric generator, the first intermediate gear system, the electric motor, the second intermediate gear system), since these masses are constant design values of the driving unit. Further, the control unit may also be configured to receive real-time data on the specific rotational speed of each of the rotating masses (e.g., by arranging sensors configured to detect the rotational speed/velocity of each rotating mass). Accordingly, the control unit may be configured to calculate the rotational inertias of each rotating mass (based on the respective mass, the respective geometrical configuration and the respective rotational velocity of each mass), and may be further configured to determine (based on the calculated rotational inertias and the information about the relative positions -e.g., distances, for example, distances between the respective axis around which each rotating mass rotates- between each rotating mass) a range of rotational speeds for the electric motor for compensating vibrations and/or for reducing the resistance to steer of the vehicle equipped with the driving unit. Thus, the control unit may be configured, for example, to control the rotational speed of the electric motor when rotating in the first direction so as to at least partially compensate the rotational inertias of the rest of the rotating masses of the driving unit, thereby reducing the vibrations of the driving unit and/or so as to improve the steering ability of the vehicle in which the driving unit is installed.

It is noted that all the technical features described for the control unit are transversally compatible with all the embodiments of the driving unit.

In some embodiments, the driving unit may comprise at least one housing (e.g. rigid housing) configured to house at least the electric generator, the first intermediate gear system, the electric motor and the second intermediate gear system. Optionally, the pedal gear wheel and/or the output gear wheel may also be housed within the housing. This configuration is especially advantageous because it allows the driving unit to be configured as a single-body element (i.e. the housing may comprise the elements of the driving unit) with inner/integrated compensation of its rotational inertias. In preferred embodiments, the output gear wheel may be arranged outside the housing, thereby providing direct/full access to the external transmission system for maintenance purposes.

In preferred embodiments, the first axis, the second axis and the third axis may be parallel to each other and perpendicular to the longitudinal direction of the vehicle (which is the longitudinal direction of the driving unit). The second axis may be arranged between the first axis and the third axis along the direction of travel (i.e., along the longitudinal direction of the vehicle) of the electric bike. Preferably, the first axis may be arranged in a rearward position along the longitudinal direction and the third axis may be arranged in a forward position along the same longitudinal direction. In some embodiments, the second axis may be arranged closer to the third axis than to the first axis along the direction of travel (i.e., along the longitudinal direction) of the electric vehicle (e.g., bike/bicycle or motorcycle).

The second axis may be arranged in a lower vertical position with respect to a vertical direction of the electric bike than the first axis and the third axis. Thus, the second axis may be positioned below the position of the first axis and below the position of the third axis, when considering the vertical direction. The vertical direction is considered with respect to the vehicle (i.e., to the driving unit) and is substantially perpendicular to the longitudinal direction. Preferably, the first axis may be arranged in a lower vertical position with respect to the vertical direction of the electric bike than the third axis.

According to the arrangement defined for the second axis and the third axis, the electric motor may be arranged in a frontal (considering the longitudinal direction) and upper (considering the vertical direction) position of the driving unit, and the electric generator may be arranged in a frontal and lower/bottom position of the driving unit. It is noted that, although the electric motor and the electric generator may be arranged in a frontal position of the driving unit, the electric motor may be arranged in a more forward position (along the longitudinal direction) than the electric generator. This configuration provides the synergistic technical effect of significantly reducing the vibrations of the driving unit (due to the partial compensation of inertias between the rotating masses of the electric motor and the electric generator, since both elements rotate in opposing directions), while an improved cooling (due to the exposition to a frontal air flow resulting from the advance in the forward direction of travel of the vehicle) is provided to electric motor and the electric generator, which are the elements having a higher temperature of operation. Thus, the reliability of the driving unit is synergistically improved. This is compatible with those embodiments in which the driving unit comprises one (or more) houses for housing the above defined elements of the driving unit.

In preferred embodiments, the first intermediate gear system and/or the second intermediate gear system may be arranged between the first axis and the third axis along the longitudinal direction of the vehicle. Further, the first intermediate gear system and/or the second intermediate gear system may be arranged in a higher vertical position (i.e., along the vertical direction) of the electric bike than the second axis.

The first and/or the second intermediate gear system may comprise, respectively, at least one gear wheel each. In some embodiments, at least one gear wheel of the first intermediate gear system may be configured rotate around a fourth axis, preferably in the second rotation direction (said at least one wheel may be configured to engage with the pedal gear wheel of the pedal system, such that said at least one wheel rotates in a rotation direction being opposite/contrary to the rotation direction of the pedal system, which is the first rotation direction). The fourth axis may be arranged between the first axis and the second axis along the longitudinal direction (e.g. the fifth axis may be arranged parallel to the first axis and to the second axis). Preferably, the fourth axis may be arranged in a higher vertical position with respect to the vertical direction than the first axis and the second axis; and/or a perpendicular distance between the second axis and the fourth axis may be configured to be substantially equivalent to a perpendicular distance between the second axis and the third axis (within a predetermined tolerance).

In some embodiments, the second axis, the third axis and the fourth axis may be arranged substantially forming an equilateral triangle within a tolerance (i.e. all three axes may be arranged parallel to each other forming a triangular prism, each of the edges of which corresponds to one of the axes). This configuration provides an improved compensation of the rotational inertias, thereby reducing undesired vibrations in the driving unit. These configurations provide an improved compensation of the rotational inertias, thereby reducing undesired vibrations in the driving unit.

Further, at least one gear wheel of the second intermediate gear system may be configured to rotate in the second rotation direction around the same axis (i.e., the fourth axis) or around a different axis (e.g., a fifth axis). The fifth axis may be arranged between the second axis and the fourth axis along the longitudinal direction of the driving unit (e.g. the fifth axis may be arranged parallel to the second axis and to the fourth axis). Preferably, the fifth axis may be arranged in a higher vertical position with respect to the vertical direction than the first axis and the second axis; and/or a perpendicular distance between the second axis and the fifth axis may be configured to be substantially equivalent to a perpendicular distance between the first axis and the fifth axis (within a predetermined tolerance). This contributes to the reduction of undesired vibrations in the driving unit. In some compatible embodiments, the perpendicular distance between the first axis A and the second axis B is substantially equivalent (i.e., equal) to the perpendicular distance between the third axis C and the fourth axis D. Preferably, the second axis, the third axis and the fourth axis may be arranged such that each axis is configured as a vertex of a substantially equilateral triangle (e.g. within a 5% tolerance) (i.e. all three axes may be arranged parallel to each other forming a triangular prism, each of the edges of which corresponds to one of the axes).

The first intermediate gear system may comprise a planetary gear system. The at least one gear wheel of the second intermediate gear system configured to rotate in the second rotation direction may be an integral part of the planetary gear system. The planetary gear system may comprise a static ring gear, a sun gear, two or more planet gears (preferably, three or four) and a planet carrier, wherein the planet carrier may be connected to the pedal gear wheel to receive the input mechanical energy such that, when the pedal gear wheel rotates in the first rotating direction, then the planet carrier rotates in the second rotation direction (e.g., around the fourth axis), so that the one or more planets (i.e., planet gears) cause the sun gear to rotate in the second rotation direction.

Thus, in those embodiments of the driving unit in which the first intermediate gear system is configured to transmit the input mechanical energy of the pedal system to the electric generator to cause the generator to rotate around the second axis in the second rotation direction (e.g. when the electric motor is configured to rotate in the first rotation direction), the first intermediate gear system may comprise a respective reversing gear wheel that may be configured to transmit the rotation of the sun gear to the electric generator such that the reversing gear wheel rotates in the first rotation direction and the electric generator rotates in the second rotation direction. Preferably, the first intermediate gear system may further comprise a first primary gear wheel configured to rotate in conjunction with (i.e., together with) the sun gear and configured to have a greater diameter than the sun gear, wherein the respective reversing gear may be connected to (e.g., engaged with) the first primary gear wheel to transmit the rotation of the sun gear to the electric generator. The first primary gear wheel may preferably be configured to rotate around the same axis as the sun gear (e.g., around the fourth axis), thereby all the masses of the first intermediate gear system rotate around a central axis (e.g., the fourth axis) of the planetary gear system, with the exception of the first reversing gear wheel.

The respective reversing gear wheel of the first intermediate gear system may be configured to have a diameter smaller than the diameter of the first primary gear wheel. In preferred embodiments, the reversing gear may have a diameter equal to or greater than the diameter of each of the planet gears. Therefore, the rotating mass of the first reversing gear may be very small in comparison with the rest of the rotating masses of the first intermediate gear system.

The first intermediate gear system may further comprise a planet carrier auxiliary gear wheel configured to rotate in conjunction with the planer carrier, such that the planet carrier may be connected to the pedal system by means of the connection between the pedal gear wheel and the planet carrier auxiliary gear wheel. Preferably, the gear ratio between the pedal gear wheel and the planet carrier auxiliary gear wheel is configured such that an angular speed of the of the planet carrier is greater than an angular speed of the pedal gear wheel. Further, the gear ration between the planetary gear system and the reversing gear wheel 35 may be configured to multiply the angular velocity of the pedal system before transmitting it to the electric generator.

The first intermediate gear system may be configured such that, when the pedal gear wheel rotates in a range between 50 to 70 rpm (preferably at 60 rpm) in the first direction, then the electric generator rotates (either in the second direction or in the first direction, depending on the embodiment) at its optimum rotational speed within a predetermined tolerance. The optimum rotational speed of the electric generator is a constructive parameter of an electric generator, so that the first intermediate gear system may be configured to have a gear ratio adapted to transform the rotational speed of the pedal gear wheel to meet the optimum rotational speed of the electric generator of the driving unit.

The second intermediate gear system may comprise a first intermediate gear wheel connected to the electric motor (e.g., engaged with a motor gear wheel rotating in conjunction with the axis of the electric motor) to receive a rotational energy generated by the electric motor, and a second intermediate gear wheel configured to transmit the rotation energy of the first intermediate gear wheel (i.e., the rotation energy generated by the electric motor, which is then received by the first intermediate gear wheel) to the output gear wheel. Preferably, the first intermediate gear wheel and the second intermediate gear wheel may be configured to rotate in conjunction (i.e., together and with the same angular velocity) around a same axis (e.g., around the fourth axis or around the fifth axis), wherein more preferably the first intermediate gear has a greater diameter than the second intermediate gear.

In those embodiments of the driving unit in which the electric motor is configured to rotate in the second rotation direction (e.g. when the first intermediate gear system is configured to transmit the input mechanical energy of the pedal system to the electric generator, such that the electric generator rotates around the second axis in the first rotation direction), the second intermediate gear system may further comprise a respective reversing gear engaged with both the electric motor and the first intermediate gear wheel (e.g. the reversing gear wheel being arranged between the electric motor and the first intermediate gear wheel and being configured to operate as a mechanical interface between them), such that both the electric motor and the first intermediate gear wheel rotate in the second direction and the respective reversing wheel rotates in the first rotation direction.

Preferably, the driving unit may further comprise a receiving gear wheel configured to rotate in conjunction (i.e., together and with the same angular velocity) with the output gear wheel around the same axis (e.g., around the first axis or around an additional axis being independent from the first axis), wherein the second intermediate gear wheel may preferably be connected to the receiving gear wheel, such that the rotation energy of the first intermediate gear wheel is transmitted to the output gear wheel.

The second intermediate gear system may be configured as a velocity reducer gear system to reduce the angular velocity transmitted to the output gear wheel (originally generated by the electric motor).

In some embodiments, the sun gear, the planet carrier, the first primary gear wheel, the first intermediate gear wheel and the second intermediate gear wheel may be configured to rotate in the second rotation direction around the fourth axis. This configuration has the advantage of unifying the axis of rotation of the plurality of masses (i.e., the masses of the above-listed elements) which rotate in the second rotation direction. In other embodiments, the sun gear, the planet carrier, the first primary gear wheel and the planer carrier auxiliary gear wheel may be configured to rotate in the second rotation direction around the fourth axis, while the first intermediate gear wheel and the second intermediate gear wheel may be configured to rotate in the second rotation direction around the fifth axis.

In preferred embodiments, the output gear wheel may be arranged and configured to rotate around the first axis. This configuration is compatible with those embodiments in which the driving unit further comprises a receiving gear wheel configured to rotate in conjunction with the output gear wheel around the same axis. These configurations provide the technical effect of unifying the axis of rotations of a plurality of masses rotating in the first rotation direction, thereby contributing to reduce undesired vibrations in the driving unit.

A second aspect of the invention refers to an electric vehicle (e.g., an electric bicycle/bike or motorcycle) comprising a driving unit according to any of the embodiments previously described.

In a preferred embodiment, the electric vehicle may comprise a transmission system (e.g., a transmission chain or belt) configured to transmit the rotation of the output gear wheel to at least one wheel of the vehicle (preferably to at least a rear wheel). The at least one wheel (e.g. the rear wheel) of the vehicle may comprise a sprocket/pinion, such that the transmission system is configured to transmit the rotation of the output gear wheel to said sprocket/pinion. The sprocket may be configured as a conventional pinion of a bicycle, i.e., a pinion configured to transmit the rotation to the respective wheel only in a forward direction of travel.

In some embodiments, the sprocket/pinion may be configured as a fixed sprocket/pinion (i.e., a pinion configured to transmit the rotation to the respective wheel both in a forward and in a backward direction of travel), thereby enabling a bidirectional transmission of the rotation of the output gear wheel, such that when the output gear wheel rotates in the first direction (e.g., due to the combined operation of the electric motor and the second intermediate gear system), then the fixed sprocket/pinion rotates in the first direction, and when the output gear wheel rotates in the second direction (e.g., due to the electric motor temporarily reversing its rotation direction for causing the vehicle to move backwards), then the fixed sprocket/pinion rotates in the second direction. The fixed sprocket/pinion provides the electric vehicle with the additional advantage of enabling the possibility of generating energy (e.g., for charging the battery of the electric vehicle) under braking conditions and/or when the vehicle is travelling down a descending slope.

### BRIEF DESCRIPTION OF THE FIGURES

Preferred embodiments of the quick connector are described below with reference to the attached drawings, in which:
Fig. 1 depicts three different views of a driving unit 1 device according to embodiments of the invention, wherein the driving unit comprises a housing 70. Fig. 1A shows a lateral view of a left side of the driving unit 1, while Fig. 1B shows a lateral view of a right side of the driving unit and Fig. 1C depicts a top view of the driving unit 1.
Fig. 2 shows a view of the left side of the driving unit 1 of Fig. 1, wherein different elements are selectively hidden in order to better illustrate the configuration of the first intermediate transmission system of the driving unit shown in Figs. 2A to 2C.
Fig. 3 shows a view of the right side of the driving unit 1 of Figs. 1 and 2, wherein different elements are selectively hidden in order to better illustrate the configuration of the second intermediate transmission system of the driving unit in Figs. 3A to 3C.
Fig. 4 is a top view of a driving unit according to embodiments of the invention, wherein the housing is not visible for illustrative purposes (or not having a housing), so that the arrangement of the first axis, the second axis, the third axis, the fourth axis and the optional fifth axis is shown.
Fig. 5 represents an electric bicycle comprising a driving unit according to embodiments of the invention.

### DETAILED DESCRIPTION OF THE DRAWINGS

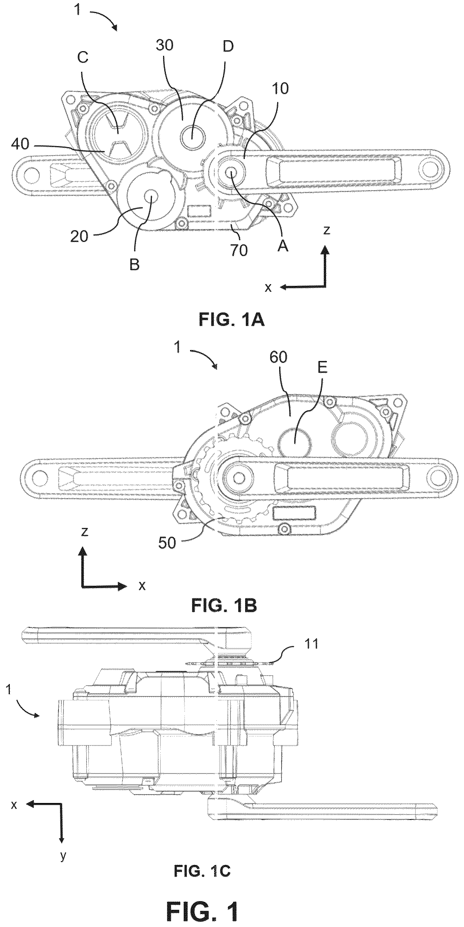

Fig. 1 depicts three different views of a driving unit 1 device according to embodiments of the invention. Fig. 1A shows a lateral view of the left side of the driving unit 1, while Fig. 1B shows a lateral view of the right side of the driving unit and Fig. 1C depicts a top view of the driving unit 1.

The driving unit 1 for an electric bicycle or motorcycle of Fig. 1 comprises a pedal system 10, an electric generator 20, a first intermediate gear system 30, an electric motor 40, an output gear wheel 50, a second intermediate gear system 60 and a control unit (not visible in the figures). The location of all these elements is indicated in Fig. 1, although they are not directly visible due the presence of the housing 70. It is noted that, in this particular embodiment, the driving unit 1 comprises a housing 70, such that all the elements of the driving unit 1 are housed within the housing 70 with the exception of the output gear wheel 50, the pedal cranks and the pedals. However, this is an optional advantageous configuration, and the housing 70 may be adapted for other compatible embodiments according to the description provided.

The pedal system 10 Is configured to rotate in a first rotation direction (a counter-clockwise rotation direction in Fig. 1A) around a first axis A based on an input mechanical energy provided by a user of the electric bike (e.g., by pedalling).

The embodiment of Fig. 1 shows that the four axes A, B, C, D are arranged perpendicularly to the longitudinal direction x and parallel to each other. The second axis B is arranged between the first axis A and the third axis C along the longitudinal direction x. The first axis A is arranged in a rearward position (considering a standard forward direction of travel for the vehicle) along the longitudinal direction x, and the third axis C is arranged in a forward position along the same longitudinal direction x.

The second axis B is arranged closer to the third axis C than to the first axis A along the longitudinal direction x. The second axis B is shown as arranged in a lower vertical position with respect to a vertical direction z than the first axis A and the third axis C. Thus, the second axis B is positioned below the position of the first axis A and below the position of the third axis C, when considering the vertical direction z. The vertical direction z is considered with respect to the vehicle (or de driving unit itself) and is substantially perpendicular to the longitudinal direction x. Further, the first axis A is depicted as arranged in a lower vertical position with respect to the vertical direction z than the third axis C.

Additionally, Fig. 1 shows a particularly optimized configuration (which is an optional configuration) for the arrangement of the first axis A, the second axis B, the third axis C and the fourth axis D. This configuration shows that a perpendicular distance between the second axis B and the fourth axis D is equivalent to a perpendicular distance between the second axis B and the third axis C (within a tolerance a predetermined tolerance, e.g. a tolerance of a 5%), and that a perpendicular distance between the second axis B and the fifth axis E is equivalent to a perpendicular distance between the first axis (A) and the fifth axis E. The optimized configuration further defines that the perpendicular distance between the first axis A and the second axis B is substantially equivalent (i.e., equal) to the perpendicular distance between the third axis C and the fourth axis D.

It is noted, that in Fig 1, a substantially equilateral triangle is formed by the positions of the second axis B, the third axis C and the fourth axis D. However, this is an optional feature of the invention.

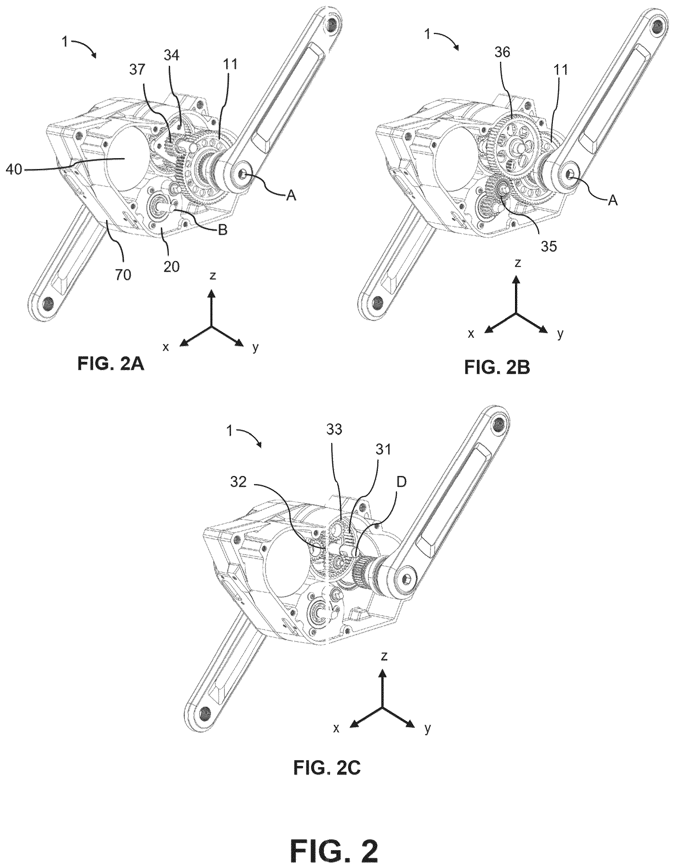

Fig. 2 shows a view of the left side of the driving unit 1 of Fig. 1, wherein different elements are selectively hidden in order to better illustrate the configuration of the device in Figs. 2A to 2C.

Fig. 2 shows a pedal system 10 comprising two pedals (not shown in the figures), two pedal cranks and a pedal gear wheel 11, wherein the pedal gear wheel 11 is configured to rotate around the first axis A in the first rotational direction. The electric generator 20 is configured to be connected to a battery, preferably an external battery.

The first intermediate gear system 30 is configured to connect the pedal gear wheel 11 of the pedal system 10 to the electric generator 20 and is further configured to transmit the input mechanical energy of the pedal system 10 to the electric generator 20, such that the electric generator 20 rotates around the second axis B in a second rotation direction being opposite to the first direction (in this case, the first direction is a counter-clockwise direction and the second direction is a clockwise direction), thereby generating an electric power. Thus, the pedal system 10 and the electric generator 20 are advantageously configured to rotate in opposite directions, so that their respective rotational inertias at least partially compensate each other.

It should be noted that in other embodiments compatible with the invention and disclosed above, the first intermediate gear system 30 may alternatively be configured to transmit the input mechanical energy of the pedal system 10 to the electric generator 20, such that the electric generator 20 rotates around the second axis B in the first rotation direction. In these embodiments, the pedal system and the electric motor are advantageously configured to rotate in opposite direction, so that their respective rotations inertias at least partially compensate each other.

In Fig. 2, an energy input block/system is provided by the combination of the pedal system 10, the first intermediate gear system 30 and the electric generator 20.

Figs. 2B and 2C show that the first intermediate gear system 30 comprises a planetary gear system and an optional reversing gear wheel 35. The planetary gear system comprises a static ring gear 31, a sun gear 32, three planet gears 33 (although other configurations are possible according to the description provided) and a planet carrier 34. The planet carrier 34 is connected to the pedal gear wheel 11 to receive the input mechanical energy such that, when the pedal gear wheel 11 rotates in the first rotating direction, then the planet carrier 34 rotates in the second rotation direction, so that the one or more planets 33 (i.e., planet gears) cause the sun gear 32 to rotate in the second rotation direction.

The reversing gear wheel 35 of the first intermediate gear system 30 is configured to transmit the rotation of the sun gear 32 to the electric generator 20 such that the reversing gear wheel 35 rotates in the first rotation direction and the electric generator 20 rotates in the second rotation direction. Fig. 2B shows that the first intermediate gear system 30 further comprises a first primary gear wheel 36 configured to rotate in conjunction with (i.e., together with) the sun gear 32. The first primary gear wheel 36 is configured to have a greater diameter than the sun gear 32, wherein the reversing gear 35 is connected to (e.g., engaged with) the first primary gear wheel 36 to transmit the rotation of the sun gear 32 to the electric generator 20. The first primary gear wheel 36 is configured to rotate around the same axis (i.e., the fourth axis D) as the sun gear 32. Thus, all the masses of the first intermediate gear system advantageously rotate around a central axis (axis D) of the planetary gear system, with the exception of the reversing gear wheel 35, whose mass is very small in comparison with the mass of the planetary gear system.

The reversing gear wheel 35 is configured to have a diameter smaller than the diameter of the first primary gear wheel 36. In this embodiment, the reversing gear has a diameter greater than the diameter of each of the planet gears.

It should be noted that the reversing gear wheel 35 of the first intermediate gear system 30 depicted in Fig. 2 is an optional feature of the invention that is only present in those embodiments of the driving unit 1 in which the first intermediate gear system 30 is configured to transmit the input mechanical energy of the pedal system 10 to the electric generator 20 to cause the generator 20 to rotate around the second axis B in the second rotation direction (e.g. when the electric motor is configured to rotate in the first rotation direction).

However, in those alternative embodiments (not shown in the figures) in which the electric motor 40 is configured to rotate in the second rotation direction (e.g. when the first intermediate gear system 30 is configured to transmit the input mechanical energy of the pedal system 10 to the electric generator 20, such that the electric generator 20 rotates around the second axis B in the first rotation direction), the first intermediate gear system 30 does not require any reversing gear wheel 35, but the second intermediate gear system 60 may further comprise a respective reversing gear engaged with both the electric motor 40 and the first intermediate gear wheel 61 (e.g. the reversing gear wheel being arranged between the electric motor 40 and the first intermediate gear wheel 61 and being configured to operate as a mechanical interface between them), such that both the electric motor 40 and the first intermediate gear wheel 61 rotate in the second direction and the respective reversing wheel of the second intermediate gear system 60 rotates in the first rotation direction.

The first intermediate gear system 30 of Fig. 2 further comprises a planet carrier auxiliary gear wheel 37, which is configured to rotate in conjunction with the planet carrier 34, wherein the planet carrier 34 is connected to the pedal system 10 by means of the connection between the pedal gear wheel 11 and the planet carrier auxiliary gear wheel 37. In particular, the gear ratio between the pedal gear wheel and the planet carrier auxiliary gear wheel is configured such that an angular velocity of the of the planet carrier is greater than an angular velocity of the pedal gear wheel. Further, the gear ratio between the planetary gear system and the reversing gear wheel 35 is configured to multiply the angular velocity of the pedal system 10 before transmitting it to the electric generator 20.

In some embodiments compatible with Figs. 1 and 2, the first intermediate gear system 10 is configured such that, when the pedal gear wheel rotates in a range between 50 to 70 rpm (preferably at 60 rpm) in the first direction, then the electric generator rotates in the second direction at its optimum rotational speed within a predetermined tolerance. The optimum rotational speed of the electric generator is a constructive parameter of an electric generator, so that the first intermediate gear system may be configured to have a gear ratio adapted to transform the rotational speed of the pedal gear wheel to meet the optimum rotational speed of the electric generator of the driving unit.

Although it is not visible, the control unit may be configured to regulate/adapt the mechanical resistance of the electric generator.

Additionally, the particular arrangement defined for the second axis B and the third axis C, implies that the electric motor 40 is arranged in a frontal (considering the longitudinal direction x) and upper (considering the vertical direction z) position of the driving unit 1, and the electric generator 20 is arranged in a frontal and lower/bottom position of the driving unit 1. It is noted that, although the electric motor 40 and the electric generator 20 are arranged in the frontal position of the driving unit 1, the electric motor 40 is arranged in a more forward position than the electric generator 20. This configuration provides the synergistic technical effect of significantly reducing the vibrations of the driving unit 1 (due to the partial compensation of inertias between the rotating masses of the electric motor 40 and the electric generator 20, since both elements rotate in opposing directions), while an improved cooling is provided to electric motor 40 and the electric generator 20, which are the elements having a higher temperature of operation. Thus, the reliability of the driving unit is improved.

The housing 70 of the driving unit 1 is shown in Fig. 1 and 2 as being configured to have a particular shape that partially surrounds the electric motor 40 and the electric generator 20. Thus, a first portion of the housing 70 is configured to partially surround the electric motor 40 to improve the cooling of the electric motor 40 (which is the element having the highest temperature of operation of the driving unit), wherein the electric motor 40 is configured as a substantially cylindrical body arranged along the third axis C. In the depicted embodiments the first portion of the housing 70 is configured to surround a part of the cylindrical body of the electric motor 40 extending along approximately 140 degrees. In other compatible embodiments, the first portion may be configured/shaped to cover/surround a part of the body of the electric motor 40 extending along an angle in the range 90 to 270 degrees, preferably 100 to 200 degrees, and more preferably 125 to 160 degrees.

The housing 70 further comprises a second portion configured to partially surround the electric generator 20. Thus, a second portion of the housing 70 is configured to partially surround the electric generator 20 to improve the cooling of the electric generator 20, wherein the electric motor 20 is configured as a substantially cylindrical body arranged along the second axis B. In the depicted embodiments the second portion of the housing 70 is configured to surround a part of the cylindrical body of the electric generator 20 extending along approximately 80 degrees. In other compatible embodiments, the second portion may be configured/shaped to cover/surround a part of the body of the electric generator 20 extending along an angle in the range 60 to 120 degrees, preferably 70 to 90 degrees.

Further, an inclined surface is arranged connecting the first portion and the second portion of the housing 70, this surface improves the cooling capabilities of the housing 70, since provides a thermal path for evacuating undesired heat through the part of the housing 70 receiving a higher flow of air during when the vehicle moves in a forward direction of travel.

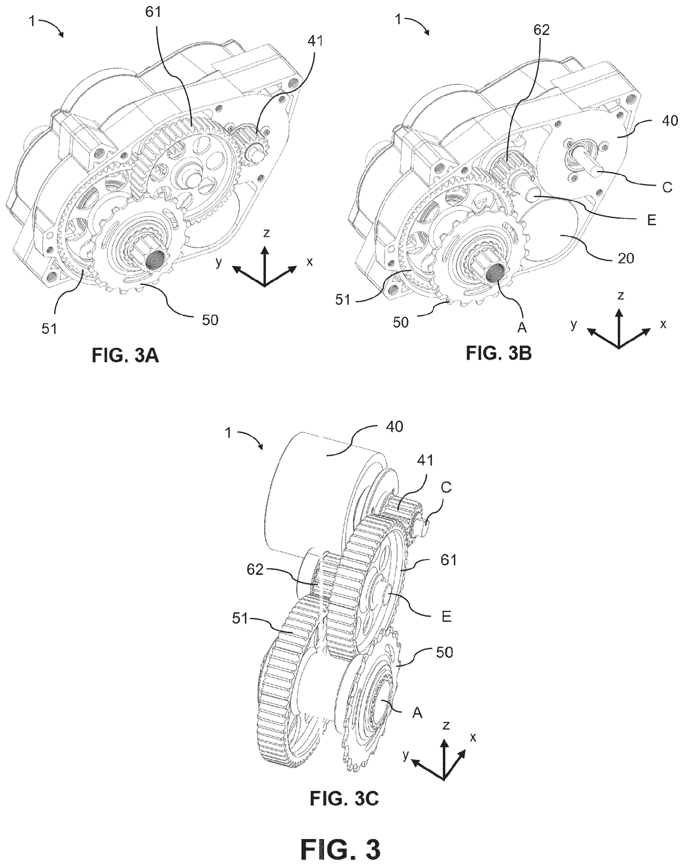

Fig. 3 illustrates complementary views of the same embodiment of Figs. 1 and 2. The electric motor 40 is configured to rotate around the third axis C in the first rotation direction based on an electric energy provided by the external battery and/or by the electric generator. The rotation of the electric motor 40 is mechanically independent from the rotation of the pedal system 10.

The output gear wheel 50 of Fig. 3 is configured to be connectable to at least one wheel (preferably, at least to a rear traction/driving wheel) of the electric bike/motorcycle by means of an external transmission system (not visible). The external transmission system (e.g., a transmission chain or belt) may be configured to connect the output gear wheel 50 with the at least one wheel (e.g., with a sprocket arranged on the at least one wheel) of the vehicle to cause the electric bike/motorcycle to travel, forwardly or backwardly, along a direction of travel (i.e., along the longitudinal direction x).

Fig. 3 shows a second intermediate gear system 60 comprising a first intermediate gear wheel 61 connected to the electric motor 40 to receive a rotational energy generated by the electric motor 40, and a second intermediate gear wheel 62 configured to transmit the rotation energy of the first intermediate gear wheel 61 (i.e., the rotation energy generated by the electric motor 80, which is then received by the first intermediate gear wheel 61) to the output gear wheel. In the embodiment of Fig. 3, the connection between the first intermediate gear wheel 61 and the electric motor 40 is achieved by arranging an optional motor gear wheel rotating 41 that is configured to rotate in conjunction with the axis of the electric motor 80, so that the intermediate gear wheel 61 is connected to the motor gear wheel 41.

The first intermediate gear wheel 61 and the second intermediate gear wheel 62 are configured to rotate in conjunction (i.e., together and with the same angular velocity) around the fifth axis E (it is noted that in other embodiments these gear wheels may be configured to rotate around the fourth axis D instead). The first intermediate gear has a greater diameter than the second intermediate gear.

The driving unit 1 of the embodiments shown in Fig. 3 further comprise a receiving gear wheel 51 configured to rotate in conjunction (i.e., together and with the same angular velocity) with the output gear wheel 50 around the same axis (i.e., around the first axis A). It is noted that the in other embodiments, the output gear wheel 50 (and the optional receiving gear wheel 51) may be configured to rotate around an additional axis being independent from any of the previously described axes. Further, the second intermediate gear wheel 62 is connected to the receiving gear 51, such that the rotation energy of the first intermediate gear wheel 61 is transmitted to the output gear wheel 50.

In the embodiments of Figs. 1 to 3, the sun gear 32, the planet carrier 34, the first primary gear wheel 36 and the planet carrier auxiliary gear wheel 37 are configured to rotate in the second rotation direction around the fourth axis D, while the first intermediate gear wheel 61 and the second intermediate gear 62 wheel are configured to rotate in the second rotation direction around the fifth axis E.

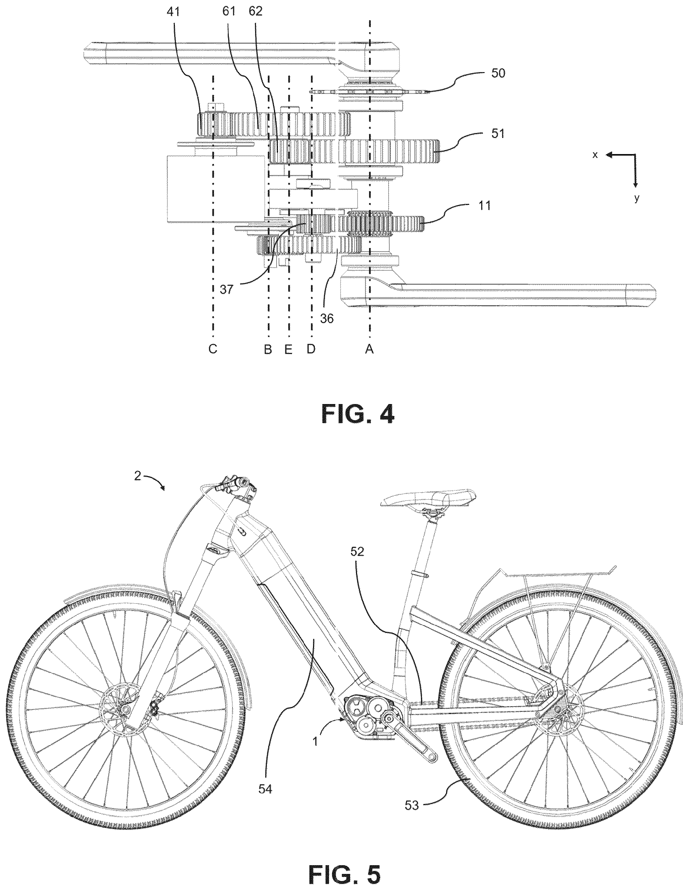

Fig. 4 shows a top view of a driving unit 1 compatible with the embodiments depicted in the preceding figures, wherein the optional housing is not visible for illustrative purposes, so that the arrangement of the first axis A, the second axis B, the third axis C, the fourth axis D and the optional fifth axis E is shown. It is noted that, according to the configuration shown, the first intermediate gear system 30 is arranged on the left side of the driving unit 1, while the second intermediate gear system 60 and the output gear wheel 50 are arranged on the right side of the driving unit 1. This configuration is particularly useful for being used in bikes or motorcycles having a connection with the traction wheel of the vehicle on the right side of the traction wheel (e.g., by arranging a sprocket or similar on the right side of the traction wheel), so that the external transmission system may also be arranged on the right side. However, in alternative configurations, the driving unit may be configured as a mirror copy of the embodiment depicted in Fig. 4, so that the first intermediate gear system 30 may be arranged on the right side, while the second intermediate gear system 60 and the output gear wheel 50 may be arranged on the left side of the driving unit 1.

Fig. 5 depicts an electric vehicle (bike) comprising a driving unit according to any of Figs.1 to 4. The bike of Fig. 5 comprises an external transmission system 52 configured as a transmission system (although in other embodiments the external transmission system may be configured as a belt or similar) for transmitting the rotation to the rear wheel 53 (i.e. the traction/driving wheel of the vehicle). In particular, the wheel 53 of the vehicle which is receiving the transmission of the rotation comprises a sprocket/pinion, such that the transmission system 52 is configured to transmit the rotation of the output gear wheel 50 to said sprocket/pinion. The sprocket/pinion may be configured as a fixed sprocket/pinion, thereby enabling a bidirectional transmission of the rotation of the output gear wheel 50, such that when the output gear wheel 50 rotates in the first direction (e.g., due to the combined operation of the electric motor 40 and the second intermediate gear system 60), then the fixed sprocket/pinion rotates in the first direction, and when the output gear wheel 50 rotates in the second direction (e.g., due to the electric motor temporarily reversing its rotation direction for causing the vehicle to move backwards), then the fixed sprocket/pinion rotates in the second direction.

Although is not visible in the figure, an external battery may be arranged in the main body of the frame (i.e., the part connecting the steering pipe with the part where the driving unit is arranged).

## Claims

1. A driving unit (1) for an electric bike (2), the driving unit (1) comprising :
a pedal system (10) comprising a pedal gear wheel (11) configured to rotate in a first rotation direction around a first axis (A) based on an input mechanical energy provided by a user of the electric bike (2);
an electric generator (20) configured to be connected to an external battery;
a first intermediate gear system (30) configured to connect the pedal system (10) to the electric generator (20) and configured to transmit the input mechanical energy of the pedal system (10) to the electric generator (20), such that the electric generator (20) rotates around a second axis (B) in the first rotation direction or in a second rotation direction being opposite to the first rotation direction, thereby generating an electric power;
an electric motor (40) configured to rotate around a third axis (C) based on an electric energy provided by the external battery and/or by the electric generator (20) in the rotation direction being opposite to the rotation direction of the electric generator (20), wherein the rotation of the electric motor (40) is mechanically independent from the rotation of the pedal system (10);
an output gear wheel (50) configured to be connectable to at least one wheel (53) of the electric bike by means of an external transmission system (52) configured to connect the output gear wheel with the at least one wheel (53) of the electric bike (2) to cause the electric bike (2) to travel forwardly or backwardly in a direction of travel;
a second intermediate gear system (60) configured to transmit the rotation of the electric motor (40) to the output gear wheel (50), such that the output gear wheel (50) rotates in the first rotation direction; and
a control unit configured to control the rotation of the electric motor (20), wherein preferably the control unit is further configured to control a mechanical resistance of the electric generator (20).

2. The driving unit (1) of claim 1, wherein the electric motor (40) is further configured to temporarily reverse its rotation direction; and
wherein preferably the second intermediate gear system (60) is further configured to transmit the rotation of the electric motor (40) to the output gear wheel (50), such that, when the electric motor (40) reverses its rotation direction, then the output gear wheel (50) also reverses its rotation direction.

3. The driving unit (1) of claim 1 or 2, wherein the first axis (A), the second axis (B) and the third axis (C) are parallel to each other and perpendicular to a longitudinal direction (x) of the electric bike (2), wherein the second axis (B) is arranged between the first axis (A) and the third axis (C) along the longitudinal direction (x) of the electric bike; and
wherein preferably the second axis (B) is arranged closer to the third axis (C) than to the first axis (A) along the longitudinal direction (x) of the electric bike (2).

4. The driving unit (1) of any of the preceding claims, wherein the second axis (B) is arranged in a lower vertical position with respect to a vertical direction (z) of the electric bike (2) than the first axis (A) and the third axis (C);
wherein preferably the first axis (A) is arranged in a lower vertical position with respect to the vertical direction (z) of the electric bike (2) than the third axis (C).

5. The driving unit (1) of any of the preceding claims, wherein the first intermediate gear system (30) and/or the second intermediate gear system (60) are arranged: between the first axis (A) and the third axis (C) along the longitudinal direction (x) of the electric bike (2); and/or in a vertical position along a vertical direction (z) of the electric bike (2) higher than the second axis (B), preferably higher than the first axis (A).

6. The driving unit (1) of any of the preceding claims, wherein the first intermediate gear system (30) is configured such that, when the pedal gear wheel (11) rotates in a range of 50 to 70 rpm in the first rotation direction, then the electric generator rotates in the first or the second rotation direction at its optimum rotational speed.

7. The driving unity (1) of any of the preceding claims, wherein the first intermediate gear system (30) comprises at least one gear wheel (31, 32, 33, 34) configured to rotate in the second direction around a fourth axis (D) arranged between the first axis (A) and the second axis (B) along the longitudinal direction (x);
wherein preferably the fourth axis (D) is arranged in a higher vertical position with respect to the vertical direction (z) of the electric bike (2) than the first axis (A) and the second axis (B), and/or wherein a perpendicular distance between the second axis (B) and the fourth axis (D) is equivalent to a perpendicular distance between the second axis (B) and the third axis (C) within a predetermined tolerance.

8. The driving unit (1) of claim 7, wherein the second intermediate gear system (60) comprises at least one gear wheel (61, 62) configured to rotate, preferably in the second rotation direction, around the fourth axis (D) or around a fifth axis (E) being arranged between the second axis (B) and the fourth axis (D) along the longitudinal direction (x);
wherein preferably the fifth axis (E) is arranged in a higher vertical position with respect to the vertical direction (z) of the electric bike (2) than the first axis (A) and the second axis (B), and/or wherein a perpendicular distance between the second axis (B) and the fifth axis (E) is equivalent to a perpendicular distance between the first axis (A) and the fifth axis (E).

9. The driving unit (1) of claims 7 or 8, wherein the first intermediate gear system (30) comprises a planetary gear system;
wherein the planetary gear system comprises a static ring gear (31), a sun gear (32), two or more planet gears (33) and a planet carrier (34), wherein the planet carrier (34) is connected to the pedal gear wheel (11) to receive the input mechanical energy such that, when the pedal gear wheel (11) rotates in the first rotation direction, then the planet carrier (34) rotates around the fourth axis (D) in the second rotation direction, so that the one or more planet gears (33) cause the sun gear (32) to rotate in the second rotation direction; and
wherein preferably the first intermediate gear system (30) further comprises a first primary gear wheel (36) configured to rotate in conjunction with the sun gear (32) and configured to have a greater diameter than the sun gear (32).

10. The driving unit (1) of claim 9, wherein, when the first intermediate gear system (30) is configured to transmit the input mechanical energy of the pedal system (10) to the electric generator (20) such that the electric generator (20) rotates around the second axis (B) in the second rotation direction, then the first intermediate gear system (30) further comprises a respective reversing gear wheel (35) configured to transmit the rotation of the sun gear (32) to the electric generator (20) such that said reversing gear wheel (35) rotates in the first rotation direction and the electric generator (20) rotates in the second rotation direction;
wherein preferably the reversing gear wheel (35) of the first intermediate gear system (30) is connected to the sun gear (32) by means of the first primary gear wheel (36).

11. The driving unit (1) of claims 9 or 10, wherein the first intermediate gear system (30) further comprises a planet carrier auxiliary gear wheel (37) configured to rotate in conjunction with the planet carrier (34), such that the planet carrier (34) is connected to the pedal system (10) by means of the connection between the pedal gear wheel (11) and the planet carrier auxiliary gear wheel (37);
wherein preferably the gear ratio between the pedal gear wheel (11) and the planet carrier auxiliary gear wheel (37) is configured such that an angular velocity of the of the planet carrier gear wheel (37) is greater than an angular velocity of the pedal gear wheel (11).

12. The driving unit (1) of any of the preceding claims, wherein the second intermediate gear system (60) comprises a first intermediate gear wheel (61) connected to the electric motor (20) to receive a rotation energy from the electric motor (20), and a second intermediate gear wheel (62) connected to the first intermediate gear wheel (61) and configured to transmit the rotation energy of the first intermediate gear wheel (61) to the output gear wheel (50);
wherein preferably the first intermediate gear wheel (61) and the second intermediate gear wheel (62) are configured to rotate in conjunction around a same axis, wherein more preferably the first intermediate gear wheel (61) and the second intermediate gear wheel (62) are configured to rotate in conjunction around a fourth axis (D) or around a fifth axis (E).

13. The driving unit (1) of claim 12, wherein, when the first intermediate gear system (30) is configured to transmit the input mechanical energy of the pedal system (10) to the electric generator (20) such that the electric generator (20) rotates around the second axis (B) in the first rotation direction, then the second intermediate gear system (60) further comprises a respective reversing gear wheel arranged as an interface arranged between the electric motor (40) and the first intermediate gear wheel (61), wherein said reversing gear wheel is configured to operate as an interface between the electric motor (40) and the first intermediate gear wheel (61), such that both the electric motor (40) and the first intermediate gear wheel (61) rotate in the second direction and the reversing wheel of the second intermediate gear system (60) rotates in the first rotation direction.

14. The driving unit (1) of any of the preceding claims, wherein the output gear wheel (50) is arranged and configured to rotate around the first axis (A).

15. The driving unit (1) of any of the preceding claims, further comprising a housing (70) configured to house at least the electric generator (20), the first intermediate gear system (30), the electric motor (40) and the second intermediate gear system (60).

16. An electric vehicle (2) comprising:
a driving unit (1) according to any of the preceding claims;
a battery connected to the driving unit (1)
at least one wheel (53) comprising a sprocket; and
a transmission system (52) configured to transmit a rotation of the output gear wheel (50) of the driving unit (1) to the sprocket to drive the traction wheel (53), wherein preferably the sprocket is configured as a fixed sprocket/pinion.

## Patentansprüche

1. Antriebseinheit (1) für ein Elektrofahrrad (2), wobei die Antriebseinheit (1) Folgendes umfasst:
ein Pedalsystem (10), das ein Pedalzahnrad (11) umfasst, das dazu konfiguriert ist, sich in einer ersten Drehrichtung um eine erste Achse (A) zu drehen, basierend auf einer mechanischen Eingangsenergie, die von einem Benutzer des Elektrofahrrads (2) bereitgestellt wird;
einen elektrischen Generator (20), der dazu konfiguriert ist, mit einer externen Batterie verbunden zu werden;
ein erstes Zwischengetriebesystem (30), das dazu konfiguriert ist, das Pedalsystem (10) mit dem elektrischen Generator (20) zu verbinden und dazu konfiguriert ist, die mechanische Eingangsenergie des Pedalsystems (10) auf den elektrischen Generator (20) zu übertragen, so dass sich der elektrische Generator (20) um eine zweite Achse (B) in der ersten Drehrichtung oder in einer zweiten Drehrichtung, die der ersten Drehrichtung entgegengesetzt ist, dreht, wodurch elektrische Energie generiert wird;
einen Elektromotor (40), der dazu konfiguriert ist, sich um eine dritte Achse (C) basierend auf elektrischer Energie, die von der externen Batterie und/oder vom elektrischen Generator (20) bereitgestellt wird, in einer Drehrichtung zu drehen, die der Drehrichtung des elektrischen Generators (20) entgegengesetzt ist, wobei die Drehung des Elektromotors (40) mechanisch unabhängig von der Drehung des Pedalsystems (10) ist;
ein Abtriebszahnrad (50), das dazu konfiguriert ist, mit mindestens einem Rad (53) des Elektrofahrrads mittels eines externen Übertragungssystems (52) verbunden zu werden, das dazu konfiguriert ist, das Abtriebszahnrad mit dem mindestens einen Rad (53) des Elektrofahrrads (2) zu verbinden, um zu bewirken, dass sich das Elektrofahrrad (2) in einer Fahrtrichtung vorwärts oder rückwärts bewegt;
ein zweites Zwischengetriebesystem (60), das dazu konfiguriert ist, die Drehung des Elektromotors (40) auf das Abtriebszahnrad (50) zu übertragen, sodass sich das Abtriebszahnrad (50) in der ersten Drehrichtung dreht; und
eine Steuereinheit, die dazu konfiguriert ist, die Drehung des Elektromotors (20) zu steuern, wobei die Steuereinheit vorzugsweise ferner dazu konfiguriert ist, einen mechanischen Widerstand des elektrischen Generators (20) zu steuern.

2. Antriebseinheit (1) nach Anspruch 1, wobei der Elektromotor (40) ferner dazu konfiguriert ist, seine Drehrichtung vorübergehend umzukehren; und
wobei vorzugsweise das zweite Zwischengetriebesystem (60) ferner dazu konfiguriert ist, die Drehung des Elektromotors (40) auf das Abtriebszahnrad (50) zu übertragen, so dass, wenn der Elektromotor (40) seine Drehrichtung umkehrt, auch das Abtriebszahnrad (50) seine Drehrichtung umkehrt.

3. Antriebseinheit (1) nach Anspruch 1 oder 2, wobei die erste Achse (A), die zweite Achse (B) und die dritte Achse (C) parallel zueinander und senkrecht zu einer Längsrichtung (x) des Elektrofahrrads (2) sind, wobei die zweite Achse (B) zwischen der ersten Achse (A) und der dritten Achse (C) entlang der Längsrichtung (x) des Elektrofahrrads angeordnet ist; und
wobei die zweite Achse (B) vorzugsweise entlang der Längsrichtung (x) des Elektrofahrrads (2) näher an der dritten Achse (C) als an der ersten Achse (A) angeordnet ist.

4. Antriebseinheit (1) nach einem der vorhergehenden Ansprüche, wobei die zweite Achse (B) in Bezug auf eine Vertikalrichtung (z) des Elektrofahrrads (2) in einer niedrigeren vertikalen Position angeordnet ist als die erste Achse (A) und die dritte Achse (C);
wobei vorzugsweise die erste Achse (A) in Bezug auf die Vertikalrichtung (z) des Elektrofahrrads (2) in einer niedrigeren vertikalen Position angeordnet ist als die dritte Achse (C).

5. Antriebseinheit (1) nach einem der vorhergehenden Ansprüche, wobei das erste Zwischengetriebesystem (30) und/oder das zweite Zwischengetriebesystem (60) folgendermaßen angeordnet sind: zwischen der ersten Achse (A) und der dritten Achse (C) entlang der Längsrichtung (x) des Elektrofahrrads (2); und/oder in einer vertikalen Position entlang einer Vertikalrichtung (z) des Elektrofahrrads (2) höher als die zweite Achse (B), vorzugsweise höher als die erste Achse (A).

6. Antriebseinheit (1) nach einem der vorhergehenden Ansprüche, wobei das erste Zwischengetriebesystem (30) dazu konfiguriert ist, dass, wenn sich das Pedalzahnrad (11) in einem Bereich von 50 bis 70 U/min in der ersten Drehrichtung dreht, sich der elektrische Generator mit seiner optimalen Drehzahl in der ersten oder zweiten Drehrichtung dreht.

7. Antriebseinheit (1) nach einem der vorhergehenden Ansprüche, wobei das erste Zwischengetriebesystem (30) mindestens ein Zahnrad (31, 32, 33, 34) umfasst, das dazu konfiguriert ist, sich in der zweiten Richtung um eine vierte Achse (D) zu drehen, die zwischen der ersten Achse (A) und der zweiten Achse (B) entlang der Längsrichtung (x) angeordnet ist;
wobei vorzugsweise die vierte Achse (D) in Bezug auf die Vertikalrichtung (z) des Elektrofahrrads (2) in einer höheren vertikalen Position angeordnet ist als die erste Achse (A) und die zweite Achse (B), und/oder wobei ein senkrechter Abstand zwischen der zweiten Achse (B) und der vierten Achse (D) einem senkrechten Abstand zwischen der zweiten Achse (B) und der dritten Achse (C) innerhalb einer vorgegebenen Toleranz gleichkommt.

8. Antriebseinheit (1) nach Anspruch 7, wobei das zweite Zwischengetriebesystem (60) mindestens ein Zahnrad (61, 62) umfasst, das dazu konfiguriert ist, sich vorzugsweise in der zweiten Drehrichtung um die vierte Achse (D) oder um eine fünfte Achse (E) zu drehen, die zwischen der zweiten Achse (B) und der vierten Achse (D) entlang der Längsrichtung (x) angeordnet ist;
wobei vorzugsweise die fünfte Achse (E) in Bezug auf die Vertikalrichtung (z) des Elektrofahrrads (2) in einer höheren vertikalen Position angeordnet ist als die erste Achse (A) und die zweite Achse (B) und/oder wobei ein senkrechter Abstand zwischen der zweiten Achse (B) und der fünften Achse (E) einem senkrechten Abstand zwischen der ersten Achse (A) und der fünften Achse (E) gleichkommt.

9. Antriebseinheit (1) nach Anspruch 7 oder 8, wobei das erste Zwischengetriebesystem (30) ein Planetengetriebesystem umfasst;
wobei das Planetengetriebesystem ein statisches Hohlrad (31), ein Sonnenrad (32), zwei oder mehr Planetenräder (33) und einen Planetenträger (34) umfasst, wobei der Planetenträger (34) mit dem Pedalzahnrad (11) verbunden ist, um die mechanische Eingangsenergie so aufzunehmen, dass sich, wenn sich das Pedalzahnrad (11) in der ersten Drehrichtung dreht, der Planetenträger (34) dann um die vierte Achse (D) in der zweiten Drehrichtung dreht, sodass das eine oder die mehreren Planetenräder (33) bewirken, dass sich das Sonnenrad (32) in der zweiten Drehrichtung dreht; und
wobei das erste Zwischengetriebesystem (30) vorzugsweise ferner ein erstes Primärzahnrad (36) umfasst, das dazu konfiguriert ist, sich in Verbindung mit dem Sonnenrad (32) zu drehen und dazu konfiguriert ist, einen größeren Durchmesser als das Sonnenrad (32) aufzuweisen.

10. Antriebseinheit (1) nach Anspruch 9, wobei, wenn das erste Zwischenradsystem (30) dazu konfiguriert ist, die mechanische Eingangsenergie des Pedalsystems (10) auf den elektrischen Generator (20) zu übertragen, sodass sich der elektrische Generator (20) um die zweite Achse (B) in der zweiten Drehrichtung dreht, das erste Zwischengetriebesystem (30) dann ferner ein jeweiliges Umkehrzahnrad (35) umfasst, das dazu konfiguriert ist, die Drehung des Sonnenrads (32) auf den elektrischen Generator (20) zu übertragen, sodass sich das Umkehrzahnrad (35) in der ersten Drehrichtung dreht und sich der elektrische Generator (20) in der zweiten Drehrichtung dreht;
wobei das Umkehrzahnrad (35) des ersten Zwischengetriebesystems (30) vorzugsweise über das erste Primärzahnrad (36) mit dem Sonnenrad (32) verbunden ist.

11. Antriebseinheit (1) nach Anspruch 9 oder 10, wobei das erste Zwischengetriebesystem (30) ferner ein Planetenträger-Hilfszahnrad (37) umfasst, das dazu konfiguriert ist, sich in Verbindung mit dem Planetenträger (34) zu drehen, so dass der Planetenträger (34) über die Verbindung zwischen dem Pedalzahnrad (11) und dem Planetenträger-Hilfszahnrad (37) mit dem Pedalsystem (10) verbunden ist;
wobei vorzugsweise das Übersetzungsverhältnis zwischen dem Pedalzahnrad (11) und dem Planetenträger-Hilfszahnrad (37) dazu konfiguriert ist, dass die Winkelgeschwindigkeit des Planetenträger-Hilfszahnrads (37) größer ist als die Winkelgeschwindigkeit des Pedalzahnrads (11).

12. Antriebseinheit (1) nach einem der vorhergehenden Ansprüche, wobei das zweite Zwischengetriebesystem (60) ein erstes Zwischenzahnrad (61), das mit dem Elektromotor (20) verbunden ist, um eine Rotationsenergie vom Elektromotor (20) aufzunehmen, und ein zweites Zwischenzahnrad (62) umfasst, das mit dem ersten Zwischenzahnrad (61) verbunden und dazu konfiguriert ist, die Drehenergie des ersten Zwischenzahnrads (61) auf das Abtriebszahnrad (50) zu übertragen;
wobei das erste Zwischenzahnrad (61) und das zweite Zwischenzahnrad (62) vorzugsweise dazu konfiguriert sind, sich gemeinsam um dieselbe Achse zu drehen, wobei das erste Zwischenzahnrad (61) und das zweite Zwischenzahnrad (62) noch bevorzugter dazu konfiguriert sind, sich gemeinsam um eine vierte Achse (D) oder um eine fünfte Achse (E) zu drehen.

13. Antriebseinheit (1) nach Anspruch 12, wobei das erste Zwischengetriebesystem (30) dazu konfiguriert ist, die mechanische Eingangsenergie des Pedalsystems (10) auf den elektrischen Generator (20) zu übertragen, sodass der elektrische Generator (20) sich um die zweite Achse (B) in der ersten Drehrichtung dreht, das zweite Zwischengetriebesystem (60) dann ferner ein jeweiliges Umkehrzahnrad umfasst, das als Schnittstelle zwischen dem Elektromotor (40) und dem ersten Zwischenzahnrad (61) angeordnet ist, wobei das Umkehrzahnrad dazu konfiguriert ist, als Schnittstelle zwischen dem Elektromotor (40) und dem ersten Zwischenzahnrad (61) zu fungieren, sodass sowohl der Elektromotor (40) als auch das erste Zwischenzahnrad (61) in der zweiten Richtung rotieren und das Umkehrrad des zweiten Zwischengetriebesystems (60) in der ersten Drehrichtung rotiert.

14. Antriebseinheit (1) nach einem der vorhergehenden Ansprüche, wobei das Abtriebszahnrad (50) so angeordnet und dazu konfiguriert ist, dass es sich um die erste Achse (A) dreht.

15. Antriebseinheit (1) nach einem der vorhergehenden Ansprüche, ferner umfassend ein Gehäuse (70), das dazu konfiguriert ist, mindestens den elektrischen Generator (20), das erste Zwischengetriebesystem (30), den Elektromotor (40) und das zweite Zwischengetriebesystem (60) aufzunehmen.

16. Elektrofahrzeug (2), umfassend:
eine Antriebseinheit (1) nach einem der vorhergehenden Ansprüche;
eine mit der Antriebseinheit (1) verbundene Batterie
mindestens ein Rad (53) umfassend ein Kettenrad; und
ein Übertragungssystem (52), das dazu konfiguriert ist, eine Drehung des Abtriebszahnrads (50) der Antriebseinheit (1) auf das Kettenrad zu übertragen, um das Antriebsrad (53) anzutreiben, wobei das Kettenrad vorzugsweise als festes Kettenrad/Ritzel konfiguriert ist.

## Revendications

1. Unité d'entraînement (1) pour un vélo électrique (2), l'unité d'entraînement (1) comprenant :
un système pédalier (10) comprenant une roue d'engrenage de pédalier (11) conçue pour entrer en rotation dans un premier sens de rotation autour d'un premier axe (A) en fonction d'une énergie mécanique d'entrée fournie par un utilisateur du vélo électrique (2) ;
un générateur électrique (20) conçu pour être relié à une batterie externe ;
un premier système d'engrenage intermédiaire (30) conçu pour relier le système de pédalier (10) au générateur électrique (20) et conçu pour transmettre l'énergie mécanique d'entrée du système de pédalier (10) au générateur électrique (20), de telle sorte que le générateur électrique (20) entre en rotation autour d'un deuxième axe (B) dans le premier sens de rotation ou dans un second sens de rotation étant opposé au premier sens de rotation, générant ainsi de l'énergie électrique ;
un moteur électrique (40) conçu pour entrer en rotation autour d'un troisième axe (C) en fonction de l'énergie électrique fournie par la batterie externe et/ou par le générateur électrique (20) dans le sens de rotation étant opposé au sens de rotation du générateur électrique (20), dans laquelle la rotation du moteur électrique (40) est mécaniquement indépendante de la rotation du système de pédalier (10) ;
une roue d'engrenage de sortie (50) conçue pour être reliée à au moins une roue (53) du vélo électrique au moyen d'un système de transmission externe (52) conçu pour relier la roue d'engrenage de sortie à l'au moins une roue (53) du vélo électrique (2) pour amener le vélo électrique (2) en déplacement vers l'avant ou vers l'arrière selon un sens de déplacement ;
un second système d'engrenage intermédiaire (60) conçu pour transmettre la rotation du moteur électrique (40) à la roue d'engrenage de sortie (50), de telle sorte que la roue d'engrenage de sortie (50) entre en rotation dans le premier sens de rotation ; et
une unité de commande conçue pour commander la rotation du moteur électrique (20), dans laquelle, de préférence, l'unité de commande est également conçue pour commander une résistance mécanique du générateur électrique (20).

2. Unité d'entraînement (1) selon la revendication 1, dans laquelle le moteur électrique (40) est en outre conçu pour inverser temporairement son sens de rotation ; et
dans laquelle, de préférence, le second système d'engrenage intermédiaire (60) est également conçu pour transmettre la rotation du moteur électrique (40) à la roue d'engrenage de sortie (50), de telle sorte que, lorsque le moteur électrique (40) inverse son sens de rotation, alors la roue d'engrenage de sortie (50) inverse également son sens de rotation.

3. Unité d'entraînement (1) selon la revendication 1 ou 2, dans laquelle le premier axe (A), le deuxième axe (B) et le troisième axe (C) sont parallèles les uns aux autres et perpendiculaires au sens longitudinal (x) du vélo électrique (2), dans laquelle le deuxième axe (B) est agencé entre le premier axe (A) et le troisième axe (C) le long du sens longitudinal (x) du vélo électrique ; et
dans laquelle, de préférence, le deuxième axe (B) est plus proche du troisième axe (C) que du premier axe (A) le long du sens longitudinal (x) du vélo électrique (2).

4. Unité d'entraînement (1) selon l'une quelconque des revendications précédentes, dans laquelle le deuxième axe (B) est agencé dans une position verticale plus basse par rapport au sens vertical (z) du vélo électrique (2) que le premier axe (A) et le troisième axe (C) ;
dans laquelle, de préférence, le premier axe (A) est agencé dans une position verticale plus basse par rapport au sens vertical (z) du vélo électrique (2) que le troisième axe (C).

5. Unité d'entraînement (1) selon l'une quelconque des revendications précédentes, dans laquelle le premier système d'engrenage intermédiaire (30) et/ou le deuxième système d'engrenage intermédiaire (60) sont agencés : entre le premier axe (A) et le troisième axe (C) le long du sens longitudinal (x) du vélo électrique (2) ; et/ou dans une position verticale le long d'un sens vertical (z) du vélo électrique (2) plus élevée que le deuxième axe (B), de préférence plus élevée que le premier axe (A).

6. Unité d'entraînement (1) selon l'une quelconque des revendications précédentes, dans laquelle le premier système d'engrenage intermédiaire (30) est conçu de telle sorte que, lorsque la roue d'engrenage de pédalier (11) entre en rotation dans une plage de 50 à 70 tr/min dans le premier sens de rotation, alors le générateur électrique entre en rotation dans le premier ou le second sens de rotation à sa vitesse de rotation optimale.

7. Unité d'entraînement (1) selon l'une quelconque des revendications précédentes, dans laquelle le premier système d'engrenage intermédiaire (30) comprend au moins une roue d'engrenage (31, 32, 33, 34) conçue pour entrer en rotation dans le second sens autour d'un quatrième axe (D) agencé entre le premier axe (A) et le deuxième axe (B) le long du sens longitudinal (x) ;
dans laquelle, de préférence, le quatrième axe (D) est agencé dans une position verticale plus élevée par rapport au sens vertical (z) du vélo électrique (2) que le premier axe (A) et le deuxième axe (B), et/ou dans laquelle une distance perpendiculaire entre le deuxième axe (B) et le quatrième axe (D) est équivalente à une distance perpendiculaire entre le deuxième axe (B) et le troisième axe (C) à l'intérieur d'une tolérance prédéterminée.

8. Unité d'entraînement (1) selon la revendication 7, dans laquelle le second système d'engrenage intermédiaire (60) comprend au moins une roue d'engrenage (61, 62) conçue pour entrer en rotation, de préférence dans le second sens de rotation, autour du quatrième axe (D) ou autour d'un cinquième axe (E) situé entre le deuxième axe (B) et le quatrième axe (D) le long du sens longitudinal (x) ;
dans laquelle, de préférence, le cinquième axe (E) est agencé dans une position verticale plus élevée par rapport au sens vertical (z) du vélo électrique (2) que le premier axe (A) et le deuxième axe (B), et/ou dans laquelle une distance perpendiculaire entre le deuxième axe (B) et le cinquième axe (E) est équivalente à une distance perpendiculaire entre le deuxième axe (A) et le cinquième axe (E).

9. Unité d'entraînement (1) selon les revendications 7 ou 8, dans laquelle le premier système d'engrenage intermédiaire (30) comprend un système d'engrenage à satellites ;
dans laquelle le système d'engrenage à satellites comprend une couronne d'engrenage fixe (31), un planétaire (32), deux ou plusieurs satellites (33) et un porte-satellites (34), dans laquelle le porte-satellites (34) est relié à la roue d'engrenage de pédalier (11) pour recevoir l'énergie mécanique d'entrée de telle sorte que, lorsque la roue d'engrenage de pédalier (11) entre en rotation dans le premier sens de rotation, le porte-satellites (34) entre en rotation autour du quatrième axe (D) dans le second sens de rotation, de sorte que le ou les satellites (33) amènent le planétaire (32) dans le second sens de rotation ; et
dans laquelle, de préférence, le premier système d'engrenage intermédiaire (30) comprend en outre une première roue d'engrenage primaire (36) conçue pour entrer en rotation conjointement avec la roue d'engrenage solaire (32) et conçue pour avoir un diamètre supérieur à celui du planétaire (32).

10. Unité d'entraînement (1) selon la revendication 9, dans laquelle, lorsque le premier système d'engrenage intermédiaire (30) est conçu pour transmettre l'énergie mécanique d'entrée du système de pédalier (10) au générateur électrique (20) de telle sorte que le générateur électrique (20) entre en rotation autour du deuxième axe (B) dans le second sens de rotation, le premier système d'engrenage intermédiaire (30) comprend en outre une roue d'engrenage d'inversion respective (35) conçue pour transmettre la rotation du planétaire (32) au générateur électrique (20) de telle sorte que ladite roue d'engrenage d'inversion (35) entre en rotation dans le premier sens de rotation et que le générateur électrique (20) entre en rotation dans le second sens de rotation ;
dans laquelle, de préférence, la roue d'engrenage d'inversion (35) du premier système d'engrenage intermédiaire (30) est reliée au planétaire (32) au moyen de la première roue d'engrenage primaire (36).

11. Unité d'entraînement (1) selon les revendications 9 ou 10, dans laquelle le premier système d'engrenage intermédiaire (30) comprend en outre une roue d'engrenage auxiliaire de porte-satellites (37) conçue pour entre en rotation conjointement avec le porte-satellites (34), de telle sorte que le porte-satellites (34) est relié au système de pédalier (10) par la liaison entre la roue d'engrenage de pédalier (11) et la roue d'engrenage auxiliaire du porte-satellites (37) ;
dans laquelle, de préférence, le rapport d'engrenage entre la roue d'engrenage de pédalier (11) et la roue d'engrenage auxiliaire de porte-satellites (37) est conçu de telle sorte qu'une vitesse angulaire de la roue d'engrenage de porte-satellites (37) est supérieure à une vitesse angulaire de la roue d'engrenage de pédalier (11).

12. Unité d'entraînement (1) selon l'une quelconque des revendications précédentes, dans laquelle le second système d'engrenage intermédiaire (60) comprend une première roue d'engrenage intermédiaire (61) reliée au moteur électrique (20) pour recevoir une énergie de rotation du moteur électrique (20), et une seconde roue d'engrenage intermédiaire (62) reliée à la première roue d'engrenage intermédiaire (61) et conçue pour transmettre l'énergie de rotation de la première roue d'engrenage intermédiaire (61) à la roue d'engrenage de sortie (50) ;
dans laquelle, de préférence, la première roue d'engrenage intermédiaire (61) et la seconde roue d'engrenage intermédiaire (62) sont conçues pour entrer en rotation conjointement autour d'un même axe, dans laquelle plus préférablement la première roue d'engrenage intermédiaire (61) et la seconde roue d'engrenage intermédiaire (62) sont conçues pour entrer en rotation conjointement autour d'un quatrième axe (D) ou d'un cinquième axe (E).

13. Unité d'entraînement (1) selon la revendication 12, dans laquelle, lorsque le premier système d'engrenage intermédiaire (30) est conçu pour transmettre l'énergie mécanique d'entrée du système de pédalier (10) au générateur électrique (20) de telle sorte que le générateur électrique (20) entre en rotation autour du deuxième axe (B) dans le premier sens de rotation, le second système d'engrenage intermédiaire (60) comprend en outre une roue d'engrenage d'inversion respective agencée comme une interface entre le moteur électrique (40) et la première roue d'engrenage intermédiaire (61), dans laquelle ladite roue d'engrenage d'inversion est conçue pour fonctionner comme une interface entre le moteur électrique (40) et la première roue d'engrenage intermédiaire (61), de telle sorte que le moteur électrique (40) et la première roue d'engrenage intermédiaire (61) entrent en rotation dans le second sens et que la roue d'engrenage d'inversion du second système d'engrenage intermédiaire (60) entre en rotation dans le premier sens de rotation.

14. Unité d'entraînement (1) selon l'une quelconque des revendications précédentes, dans laquelle la roue d'engrenage de sortie (50) est agencée et conçue pour entrer en rotation autour du premier axe (A).

15. Unité d'entraînement (1) selon l'une quelconque des revendications précédentes, comprenant en outre un boîtier (70) conçu pour loger au moins le générateur électrique (20), le premier système d'engrenage intermédiaire (30), le moteur électrique (40) et le second système d'engrenage intermédiaire (60).

16. Véhicule électrique (2) comprenant :
une unité d'entraînement (1) selon l'une quelconque des revendications précédentes ;
une batterie reliée à l'unité d'entraînement (1)
au moins une roue (53) comprenant un pignon de chaîne ; et
un système de transmission (52) conçu pour transmettre une rotation de la roue d'engrenage de sortie (50) de l'unité d'entraînement (1) au pignon de chaîne pour entraîner la roue de traction (53), dans laquelle, de préférence, le pignon de chaîne est conçu comme un pignon de chaîne/pignon fixe.
